(19) **Europäisches Patentamt / European Patent Office / Office européen des brevets**

(11) **EP 3 030 749 B1**

(12) **FASCICULE DE BREVET EUROPEEN**

(45) Date de publication et mention
de la délivrance du brevet:
**13.10.2021 Bulletin 2021/41**

(21) Numéro de dépôt: **14790170.6**

(22) Date de dépôt: **04.08.2014**

(51) Int Cl.:
*F01D 5/14* *(2006.01)* *F04D 29/32* *(2006.01)*

(86) Numéro de dépôt international:
**PCT/FR2014/052023**

(87) Numéro de publication internationale:
**WO 2015/019009 (12.02.2015 Gazette 2015/06)**

(54) **AUBE MOBILE DE TURBOMACHINE**

MOBILE TURBOMASCHINENSCHAUFEL

MOBILE TURBOMACHINE BLADE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.08.2013 FR 1357855**

(43) Date de publication de la demande:
**15.06.2016 Bulletin 2016/24**

(73) Titulaire: **Safran Aircraft Engines**
**75015 Paris (FR)**

(72) Inventeurs:
• **CELLIER, Damien Joseph**
**F-77550 Moissy-Cramayel Cedex (FR)**
• **DUFRESNE, Alicia Lise Julia**
**F-77550 Moissy-Cramayel Cedex (FR)**

• **PELLETRAU, Philippe Pierre Marcel Marie**
**F-77550 Moissy-Cramayel Cedex (FR)**
• **PERROT, Vincent Paul Gabriel**
**F-77550 Moissy-Cramayel Cedex (FR)**
• **VILLAINES, Laurent Christophe Francis**
**F-77550 Moissy-Cramyel Cedex (FR)**

(74) Mandataire: **Cabinet Beau de Loménie**
**158, rue de l'Université**
**75340 Paris Cedex 07 (FR)**

(56) Documents cités:
EP-A1- 1 505 302 WO-A2-2009/103528
CA-A1- 2 822 786 FR-A1- 2 983 234
US-A1- 2010 054 946

• None

**Description**

DOMAINE DE L'INVENTION

Le présent exposé concerne une aube mobile de turbomachine et, plus particulièrement, de compresseur de turbomachine aéronautique comme un turboréacteur d'avion.

ETAT DE LA TECHNIQUE ANTERIEURE

Les turboréacteurs d'avion sont classiquement constitués, depuis l'amont vers l'aval dans le sens de l'écoulement des gaz, d'une soufflante, d'un ou plusieurs étages de compresseurs, par exemple un compresseur basse pression et un compresseur haute pression, d'une chambre de combustion, d'un ou plusieurs étages de turbines, par exemple une turbine haute pression et une turbine basse pression, et d'une tuyère d'échappement des gaz. Le ou les compresseurs comprennent un ou plusieurs étages d'aubes mobiles tournant devant un ou plusieurs étages d'aubes fixes (appelés étages de redresseur). Les aubes mobiles sont disposées de façon régulière sur la périphérie d'un disque entraîné par le rotor de la turbomachine. Les aubes mobiles sont fixées au rotor par leur pied et comprennent une pale s'étendant radialement depuis le pied jusqu'à l'extrémité libre (ou tête) de l'aube.

Dans le présent exposé, on appelle "direction axiale" la direction correspondant à l'axe de rotation du rotor de la turbomachine. On appelle "axe de la turbomachine" cet axe de rotation. Une direction radiale est une direction perpendiculaire à l'axe de la turbomachine et coupant cet axe. Cette direction correspond aux rayons du rotor. Enfin, on appelle "direction tangentielle" une direction perpendiculaire à l'axe de la turbomachine et à une direction radiale, ne coupant pas l'axe de la turbomachine.

Une pale d'aube peut être définie comme une série de profils ou coupes élémentaires, planes, empilées les unes sur les autres le long d'une ligne, appelée ligne d'empilage, partant de l'extrémité proximale de la pale (reliée au pied d'aube) jusqu'à l'extrémité distale de la pale (correspondant à la tête de l'aube) en reliant les centres de gravité des coupes élémentaires. La forme de l'aube peut être définie par les évolutions des profils élémentaires entre la partie basse (ou proximale) et la partie haute (ou distale) de la pale, la rotation appliquée au profil élémentaire en fonction de sa position sur la hauteur de la pale et la forme donnée à cette ligne d'empilage.

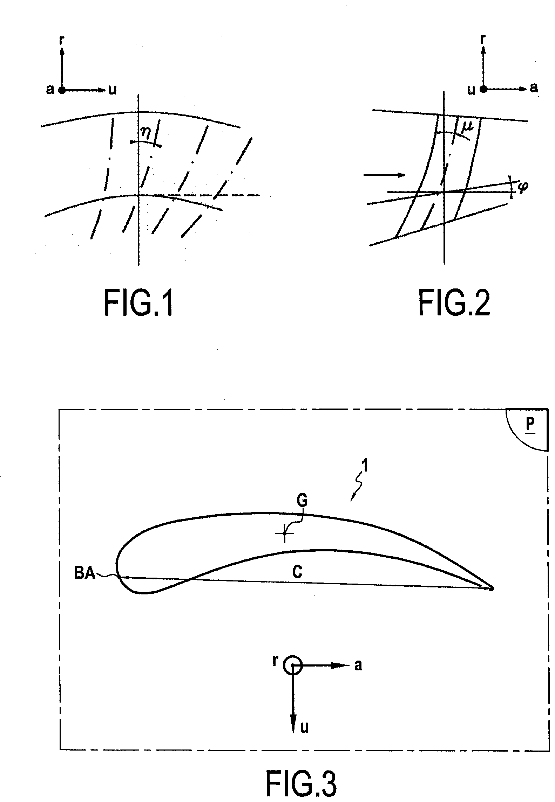

Lorsqu'une pale d'aube est définie de cette manière, chaque coupe élémentaire est positionnée radialement à une certaine hauteur. L'axe des hauteurs est orienté de manière centrifuge de sorte que les hauteurs augmentent de la partie basse ou proximale vers la partie haute ou distale de la pale. Le plan de chaque coupe élémentaire est ainsi à une certaine hauteur radiale. De plus, la position de chaque coupe élémentaire peut être repérée par son angle de flèche et son angle de dièdre. Ces angles mesurent les différences des directions entre l'écoulement et la coupe élémentaire, en projection respectivement dans un plan radial et axial, et un plan axial et tangent à la direction de rotation de la machine. Ils peuvent être exprimés, d'après les notations des figures 1 et 2, par les équations suivantes, où λ désigne l'angle de flèche, v l'angle de dièdre, $\tan\beta = \dfrac{Vu}{Va}$ et $\tan\varphi = \dfrac{Vr}{Va}$, Vr, Vu et Va étant les composantes en directions radiale, tangentielle et axiale de l'écoulement :

$$\sin\lambda = \frac{\tan\varphi + \tan\mu + \tan\eta\,\tan\beta}{\sqrt{(1 + \tan^2\eta + \tan^2\mu)(1 + \tan^2\beta + \tan^2\varphi)}}$$

$$\sin v = \frac{\sec\varphi\,\tan\eta - \tan\beta\,(\sin\varphi + \cos\varphi\,\tan\mu)}{\sqrt{(1 - \tan\varphi\,\tan\mu)^2 + (\tan\beta - \tan\varphi\,\tan\eta)^2 + (\tan\eta - \tan\beta\,\tan\mu)^2}}$$

Si l'écoulement est purement axial, ce qui est à peu près le cas en amont de l'aube, l'angle de flèche exprime l'inclinaison de l'aube en direction axiale, et l'angle de dièdre, l'inclinaison de l'aube en direction tangentielle. Un signe négatif de l'angle de flèche exprime une inclinaison vers l'amont, et un signe positif, vers l'aval ; et un signe négatif de l'angle de dièdre exprime une inclinaison vers l'intrados, et un signe positif, vers l'extrados. Les inclinaisons sont définies à partir de directions radiales vers l'extérieur.

La conception d'une aube de turbomachine, plus particulièrement de compresseur, doit répondre à différents critères multidisciplinaires. En effet, la pale de l'aube doit être optimisée en termes de rendement tout en ayant une bonne tenue mécanique, en particulier aux vitesses de rotation élevées pour lesquelles les contraintes mécaniques subies par l'aube sont des plus sévères. La conception d'une aube de compresseur doit également respecter des critères de marge au pompage.

Le document US2010054946 A1 décrit une aube selon l'art antérieur.

PRESENTATION DE L'INVENTION

Le présent exposé a pour objet une aube mobile de turbomachine, et plus particulièrement de compresseur de turbomachine, comprenant une pale définie par un empilage de coupes élémentaires planes suivant une direction radiale, chaque coupe élémentaire étant positionnée radialement à une hauteur H, la hauteur H étant exprimée en pourcentage de la hauteur totale de la pale, et étant repérée par son angle de flèche $\lambda$ et son angle de dièdre v. L'évolution de l'angle de flèche $\lambda$ en fonction de la hauteur H est telle que l'angle de flèche $\lambda$ atteint un maximum pour une hauteur H$\lambda$M, la valeur H$\lambda$M étant comprise entre 5% et 40%, et telle que l'angle de flèche $\lambda$ est croissant entre 0% et H$\lambda$M. L'évolution de l'angle de dièdre v en fonction de H est telle que l'angle de dièdre v est une fonction décroissante de la hauteur H, pour des hauteurs H comprises entre 0% et une valeur Hv1, la valeur Hv1 étant comprise entre 10% et 40%.

Les lois d'évolution de l'angle de flèche $\lambda$ et de l'angle de dièdre v précitées définissent une forme particulière pour la ligne d'empilage de la pale, dans la partie basse (ou proximale) de la pale. Cette forme particulière permet d'améliorer le comportement aéromécanique de la pale, c'est-à-dire d'augmenter le rendement de la pale sur la ligne de fonctionnement tout en réduisant sensiblement la contrainte dynamique dans le bas de la pale. La marge au pompage n'est par ailleurs pas (ou peu) dégradée par cette géométrie de la pale.

Sauf précision contraire, dans le présent exposé, les adjectifs supérieur, inférieur, positif, négatif, croissant, décroissant, convexe et concave sont utilisés au sens strict, de sorte qu'une fonction croissante (ou décroissante) n'est pas constante et qu'une fonction convexe (ou concave) n'est pas linéaire.

Dans certains modes de réalisation, chaque coupe élémentaire a une corde C définie dans le plan de la coupe élémentaire. L'évolution de la corde C en fonction de la hauteur H est telle que la corde C est une fonction continue et croissante de la hauteur H ; la corde C est une fonction convexe de la hauteur H, pour des hauteurs H comprises entre les valeurs HC1 et HC2, la valeur HC1 étant comprise entre 0 et 30%, et la valeur HC2 étant comprise entre 40% et 70%; et la droite reliant le point d'abscisse HC1 et d'ordonnée C(HC1) et le point d'abscisse HC2 et d'ordonnée C(HC2) a une pente comprise entre 0,85 et 3,70.

Dans certains modes de réalisation, la droite reliant le point d'abscisse HC1 et d'ordonnée C(HC1) et le point d'abscisse HC21 et d'ordonnée C(HC21) a une pente comprise entre 1,20 et 11,40, l'abscisse HC21 étant égale à l'abscisse HC1 plus 20%.

A une hauteur donnée, la corde d'une pale est le segment de droite reliant le bord d'attaque et le bord de fuite de la pale. Dans le présent exposé, la hauteur de pale est exprimée en pourcentage de la hauteur totale de la pale, et la valeur de corde est exprimée en pourcentage de la corde moyenne sur toute la hauteur de la pale. La pente des droites précitées s'exprime donc sans unité. Les lois d'évolution particulières de la corde au niveau de la partie basse de la pale, qui sont définies plus haut, permettent d'améliorer encore le rendement et de diminuer davantage les contraintes dynamiques dans le bas de la pale.

Dans certains modes de réalisation, l'évolution de l'angle de flèche $\lambda$ en fonction de H est telle que l'angle de flèche $\lambda$ est positif pour des hauteurs H comprises entre deux valeurs H$\lambda$1 et H$\lambda$2, les valeurs H$\lambda$1 et H$\lambda$2 étant comprises entre 0% et 50%, et que l'angle de flèche $\lambda$ est négatif entre 0% et H$\lambda$1 et/ou entre H$\lambda$2 et 100%.

Dans certains modes de réalisation, l'évolution de l'angle de dièdre v en fonction de H est telle que l'angle de dièdre v est croissant pour des hauteurs comprises entre Hv1 et Hv1+20%.

Dans certains modes de réalisation, l'évolution de l'angle de dièdre v en fonction de H est telle que l'angle de dièdre v atteint un minimum négatif pour une hauteur Hvm, la valeur Hvm étant comprise entre 10% et 40%.

Ces lois d'évolution particulières des angles de flèche et de dièdre dans la partie la plus basse de la pale permettent d'améliorer encore le rendement et de diminuer davantage les contraintes dynamiques dans le bas de la pale.

Le présent exposé concerne également un compresseur de turbomachine comprenant une pluralité d'aubes telles que décrites ci-dessus.

Le présent exposé concerne également une turbomachine comprenant une pluralité d'aubes telles que décrites ci-dessus.

Les caractéristiques et avantages précités, ainsi que d'autres, apparaîtront à la lecture de la description détaillée qui suit, d'exemples de réalisation de l'aube proposée. Cette description détaillée fait référence aux dessins annexés.

BREVE DESCRIPTION DES DESSINS

Les dessins annexés sont schématiques et ne sont pas nécessairement à l'échelle, ils visent avant tout à illustrer les principes de l'invention.

La figure (FIG) 1 représente une vue en coupe transversale, partielle et schématisée, d'un compresseur de turbomachine.

La FIG 2 représente une vue en coupe longitudinale, partielle et schématisée, d'un compresseur de turbomachine.

La FIG 3 représente un exemple de coupe élémentaire d'aube.

La FIG 4 représente des exemples de lois d'évolution de l'angle de flèche $\lambda$ en fonction de la hauteur H.

La FIG 5 représente des exemples de lois d'évolution de l'angle de dièdre v en fonction de la hauteur H.

La FIG 6 représente un premier exemple de loi de corde C en fonction de la hauteur H.

La FIG 7 représente un second exemple de loi de corde C en fonction de la hauteur H.

## DESCRIPTION DETAILLEE DE L'INVENTION

Des exemples de réalisation de l'aube de turbomachine proposée sont décrits en détail ci-après, en référence aux dessins annexés. Ces exemples illustrent les caractéristiques et les avantages de l'invention. Il est toutefois rappelé que l'invention ne se limite pas à ces exemples.

Les FIGS 1 et 2, bien connues de l'homme du métier, permettent de définir les angles $\eta$, $\mu$ et $\varphi$ d'une pale par rapport à un fluide s'écoulant dans la direction a. Les angles $\eta$, $\mu$ et $\varphi$ sont utilisés pour calculer l'angle de flèche $\lambda$ et l'angle de dièdre v selon les formules déjà présentées.

La FIG 3 représente un exemple de coupe élémentaire 1 d'aube. Une coupe élémentaire d'aube est une coupe plane située dans un plan P perpendiculaire à l'axe radial de l'aube. Le plan P d'une coupe élémentaire 1 se situe ainsi à une certaine hauteur radiale H, mesurée dans la direction radiale r. Ce plan P peut donc être muni d'un repère cartésien orthogonal (O, a, u) où l'axe des abscisses a est un axe parallèle à la direction axiale, orienté dans le sens normal de l'écoulement des gaz, et l'axe des ordonnées u est un axe tangentiel, orienté de l'intrados vers l'extrados de la pale. L'origine O du repère choisi est prise telle que l'ensemble des origines des coupes élémentaires ont toutes le même projeté orthogonal sur le plan d'équation H=0, c'est-à-dire sur le plan perpendiculaire à la direction radiale r de la pale et de hauteur H fixée à 0%. On notera que la hauteur H est exprimée en pourcentage de la hauteur totale de la pale, et que l'axe des hauteurs étant orienté de la partie basse ou proximale de la pale vers la partie haute ou distale de celle-ci, la hauteur H=0 correspond à l'extrémité proximale de la pale.

Dans le repère cartésien (O, a, u), le centre de gravité G de la coupe élémentaire a pour abscisse (ou position axiale) Xg et pour ordonnée (ou position tangentielle) Yg. Dans le présent exposé, les lois d'empilage des coupes élémentaires sont données en fonction de l'angle de flèche $\lambda$ et de l'angle de dièdre v au bord d'attaque de la pale.

La corde est le segment de droite qui relie, dans le plan de la coupe élémentaire, le bord d'attaque BA et le bord de fuite de la pale. On désigne par corde C aussi bien ce segment que la longueur de ce segment.

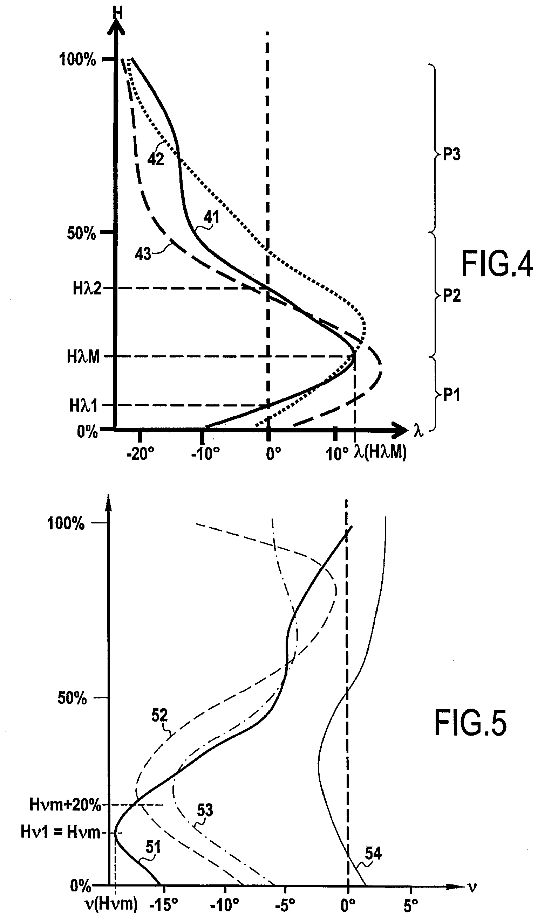

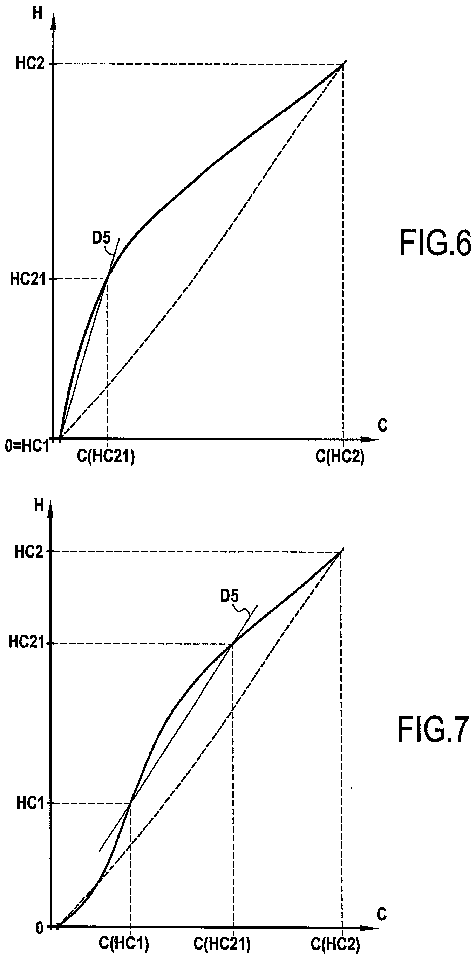

Les FIGS 4 à 7 représentent des exemples de lois d'empilage des coupes élémentaires. La FIG 4 représente des exemples de lois d'évolution de l'angle de flèche $\lambda$ en fonction de la hauteur H. La FIG 5 représente des exemples de lois d'évolution de l'angle de dièdre v en fonction de la hauteur H. Les FIGS 6 et 7 représentent des exemples de loi d'évolution de la corde C en fonction de la hauteur H.

La FIG 4 représente trois exemples 41, 42, 43 de lois d'évolution de l'angle de flèche $\lambda$ en fonction de la hauteur H, pour des hauteurs comprises entre 0% et 100% de hauteur de pale. A une hauteur H$\lambda$M comprise entre 5% et 40%, l'angle de flèche $\lambda$ atteint un maximum $\lambda$(H$\lambda$M). De préférence, le maximum $\lambda$(H$\lambda$M) est positif. Ainsi, l'angle de flèche peut être positif sur un intervalle de bornes H$\lambda$1 et H$\lambda$2 et comprenant la valeur H$\lambda$M. Les valeurs H$\lambda$1 et H$\lambda$2 peuvent être comprises entre 0% et 50%. De préférence les valeurs H$\lambda$1 et H$\lambda$2 forment un intervalle d'amplitude supérieure ou égale à 10% de hauteur de pale. Sur la FIG 4, les valeurs H$\lambda$M, $\lambda$(H$\lambda$M), H$\lambda$1 et H$\lambda$2 sont repérées en référence à la courbe représentant la loi d'évolution 41 de l'angle de flèche $\lambda$.

L'angle de flèche est croissant pour des hauteurs comprises entre 0% et H$\lambda$M. Comme représenté sur la FIG 4, l'angle de flèche à l'extrémité proximale de la pale (c'est-à-dire à la hauteur 0%) peut être positif ou négatif. S'il est positif, la valeur H$\lambda$1 peut, par exemple, valoir 0% et l'angle de flèche $\lambda$ peut, par exemple, valoir sensiblement 5° à l'extrémité proximale de la pale. S'il est négatif, alors l'angle de flèche $\lambda$ peut être négatif pour des hauteurs comprises entre 0% et la valeur H$\lambda$1. Par exemple, l'angle de flèche $\lambda$ à l'extrémité proximale de la pale peut valoir sensiblement -10°. Indépendamment, l'angle de flèche $\lambda$ peut être négatif pour des hauteurs comprises entre la valeur H$\lambda$2 et 100%. L'angle de flèche $\lambda$ peut être décroissant au moins pour des hauteurs comprises entre 90% et 100%, voire entre H$\lambda$2 et 100%, voire entre H$\lambda$M et 100%.

Dans l'exemple de la loi d'évolution 41 de la FIG 4, dans la mesure où l'angle de flèche $\lambda$ est continu, négatif aux extrémités de la pale, et où il atteint un maximum positif, la courbe représentative de l'angle de flèche $\lambda$ croise l'axe $\lambda$=0° en deux points. Sur la FIG 4, ces points ont pour abscisses respectives les valeurs H$\lambda$1 et H$\lambda$2.

L'évolution de l'angle de flèche $\lambda$ peut être divisée en trois phases, qui sont représentées sur la FIG 4 en référence à la loi d'évolution 41 mais qui peuvent se généraliser aux autres lois d'évolution de l'angle de flèche $\lambda$. Dans une première phase P1, entre 0% et H$\lambda$M, l'angle de flèche $\lambda$ croît à partir d'une valeur, éventuellement négative, jusqu'à son maximum, positif. Dans une deuxième phase P2, entre H$\lambda$M et environ H$\lambda$2+10%, l'angle de flèche $\lambda$ décroît et

repasse négatif, jusqu'à atteindre une valeur sensiblement égale à sa valeur à l'extrémité proximale de la pale (à H=0%). Dans une troisième phase P3, entre Hλ2+10% et 100%, l'angle de flèche λ décroît également, mais de manière moins abrupte que dans la deuxième phase. L'angle de flèche atteint son minimum à l'extrémité distale de la pale, c'est-à-dire pour H=100%.

Chacune des lois d'évolution 41, 42, 43 est maintenant détaillée en référence aux exemples de la FIG 4. Selon la loi d'évolution 41, l'angle de flèche λ est négatif à l'extrémité proximale de la pale et peut valoir sensiblement -10°. Il est ensuite croissant jusqu'à une hauteur HλM pouvant valoir sensiblement 20%, et y atteint son maximum valant sensiblement 12°. Il est ensuite décroissant, passe par 0° pour une hauteur Hλ2 pouvant valoir sensiblement 39%. A partir d'environ 50%, l'angle de flèche λ selon la loi d'évolution 41 décroît de manière plus lente, puis décroît à nouveau de manière plus abrupte à partir d'une hauteur pouvant valoir sensiblement 78%.

Selon la loi d'évolution 42, l'angle de flèche λ est légèrement négatif à l'extrémité proximale de la pale et peut valoir sensiblement -2°. Il est ensuite croissant jusqu'à une hauteur HλM pouvant valoir sensiblement 28%, et y atteint son maximum valant sensiblement 16°. Il est ensuite décroissant, passe par 0° pour une hauteur Hλ2 pouvant valoir sensiblement 48%. En ce point, il y a une légère rupture de pente mais la décroissance de l'angle de flèche λ reste soutenue. A partir d'environ 90% toutefois, l'angle de flèche λ selon la loi d'évolution 42 décroît de manière plus lente.

Selon la loi d'évolution 43, l'angle de flèche λ est positif à l'extrémité proximale de la pale et peut valoir sensiblement 3°. Il est ensuite croissant jusqu'à une hauteur HλM pouvant valoir sensiblement 18%, et y atteint son maximum valant sensiblement 17°. Il est ensuite décroissant, passe par 0° pour une hauteur Hλ2 pouvant valoir sensiblement 35%. A partir d'environ 50%, l'angle de flèche λ selon la loi d'évolution 43 décroît de manière plus lente et conserve cette décroissante plus lente jusqu'à atteindre son minimum à l'extrémité distale de la pale.

La FIG 5 représente quatre exemples 51, 52, 53, 54 de lois d'évolution de l'angle de dièdre v en fonction de la hauteur H, pour des hauteurs comprises entre 0% et 100% de hauteur de pale. L'angle de dièdre est décroissant entre 0% et une valeur Hv1 comprise entre 10% et 40%. A une hauteur Hvm comprise entre Hv1 et 40%, l'angle de dièdre atteint un minimum v(Hvm). De préférence, le minimum v(Hvm) est négatif. Comme c'est le cas sur la FIG 5, les valeurs Hv1 et Hvm sont éventuellement confondues. L'angle de dièdre v peut également être négatif à l'extrémité proximale de la pale, c'est-à-dire à la hauteur H=0%. De plus, dans les exemples représentés sur la FIG 5, l'angle de dièdre est croissant entre Hvm et Hvm+20%. A partir de Hvm+20% et jusqu'à 100%, l'angle de dièdre v peut suivre une loi classique, connue de l'homme du métier. Plusieurs lois complémentaires différentes sont tracées, pour des hauteurs comprises entre 60% et 100%, sur la FIG 5.

Les lois d'évolution 51, 52 et 53 de la FIG 5 ont en commun le fait que l'angle de dièdre v est décroissant entre 0% et la valeur Hvm, la valeur Hvm étant comprise entre 10 et 25% selon la loi considérée. A l'extrémité proximale de la pale (H=0%), l'angle de dièdre v peut valoir entre -20° et -5° selon la loi considérée. Le minimum v(Hvm) atteint pour une hauteur Hvm peut valoir entre -25° et -10° selon la loi considérée. Les lois 51, 52 et 53 ont également en commun le fait que l'angle de dièdre v est croissant entre la valeur Hvm et environ 50%, et qu'il est négatif pour des hauteurs H comprises entre 0% et environ 50%.

Les lois d'évolution 51, 52 et 53 sont assez différentes pour des hauteurs de pale excédant environ 50%. Selon la loi d'évolution 51 représentée en trait fort continu, l'angle de dièdre v est sensiblement constant à partir de 50% environ, sur une plage de 10 à 20%, puis il croît à nouveau, toutefois moins fortement qu'entre Hvm et environ 50%. Il est positif à l'extrémité distale de la pale. Selon la loi d'évolution 52 représentée en trait fin pointillé, l'angle de dièdre v est toujours croissant à partir d'environ 50%, et ce sur une plage de 25% à 40%, tout en restant négatif ; puis il décroît fortement sur les 10 à 25 derniers pourcents de la hauteur de la pale (vers l'extrémité distale). Selon la loi d'évolution 53 représentée en trait fin mixte, l'angle de dièdre v est légèrement croissant à partir d'environ 50%, et ce sur une plage de 10% à 20%, puis il décroît légèrement et est presque constant sur les 5 à 20 derniers pourcents de la hauteur de la pale (vers l'extrémité distale).

Sur la FIG 5, les valeurs Hvm, v(Hvm) et Hv1 sont repérées en référence à la courbe représentant la loi d'évolution 51 de l'angle de dièdre v.

Comme indiqué sur la FIG 5, selon la loi d'évolution 51, l'angle de dièdre v est négatif en pied de pale et peut valoir sensiblement -15°. Il est décroissant jusqu'à une hauteur Hvm pouvant valoir sensiblement 14%. Il est ensuite croissant jusqu'à une hauteur de sensiblement 50%. Ensuite, il croît de manière plus lente en fonction de la hauteur. Par exemple, selon la loi d'évolution 51, l'angle de dièdre v est négatif sur sensiblement toute la hauteur de la pale. L'angle de dièdre v peut être positif sur les derniers pourcents de hauteur de pale, au sommet de celle-ci, c'est-à-dire par exemple entre 97% et 100%.

Selon la loi d'évolution 52, l'angle de dièdre v est négatif en pied de pale et peut valoir sensiblement -8°. Il est décroissant jusqu'à une hauteur Hvm pouvant valoir sensiblement 22%. Il est ensuite croissant jusqu'à une hauteur de sensiblement 80%. Ensuite, il décroît à nouveau en fonction de la hauteur. Par exemple, selon la loi d'évolution 52, l'angle de dièdre v est négatif sur toute la hauteur de la pale. Toutefois, l'angle de dièdre v selon une loi d'évolution voisine de la loi d'évolution 52 pourrait être positif au niveau de ses points les plus élevés ; par exemple, il pourrait être positif autour de 80%.

Selon la loi d'évolution 53, l'angle de dièdre v est négatif en pied de pale et peut valoir sensiblement -6°. Il est décroissant jusqu'à une hauteur Hvm pouvant valoir sensiblement 22%. Il est ensuite croissant jusqu'à une hauteur de sensiblement 70%. Ensuite, il décroît légèrement en fonction de la hauteur. Il est presque constant entre 90% et 100%. Par exemple, selon la loi d'évolution 53, l'angle de dièdre v est négatif sur toute la hauteur de la pale.

Selon la loi d'évolution 54 représentée en trait fin continu sur la FIG 5, l'angle de dièdre v est positif en pied de pale et peut valoir sensiblement +2°. Il est décroissant jusqu'à une hauteur Hvm pouvant valoir sensiblement 32%. Il est ensuite croissant en fonction de la hauteur, d'abord fortement entre Hvm et sensiblement 55%, puis plus faiblement entre sensiblement 55% et 100%. Par exemple, selon la loi d'évolution 54, l'angle de dièdre v est positif en pied de pale, jusqu'à une hauteur d'environ 8%. Il peut être négatif entre sensiblement 8% et sensiblement 50%. Il peut être à nouveau positif entre sensiblement 50% et 100%.

L'homme du métier comprendra que la forme caractéristique selon l'invention concerne surtout la partie proximale de la pale. Plusieurs évolutions de l'angle de dièdre v en partie distale de pale ont été décrites. Certaines caractéristiques de certaines courbes peuvent être combinées avec des caractéristiques d'autres courbes pour créer de nouvelles lois d'évolution de l'angle de dièdre.

Des lois d'évolution de la corde sont maintenant présentées en référence aux figures 6 et 7. Sur chacune des figures 6 et 7, on a représenté en trait pointillé un exemple de loi de corde classique, tandis qu'un exemple de la nouvelle loi proposée est représenté en trait plein. L'exemple représenté de loi classique d'évolution de C est une loi croissante et affine, ou légèrement concave, depuis l'extrémité proximale de la pale jusqu'à environ la moitié de la hauteur de la pale.

La hauteur H est exprimée en pourcentage de la hauteur totale de la pale. Au-delà des intervalles sur lesquels les courbes des FIGS 6 et 7 sont représentées, les nouvelles lois d'évolution proposées pour C rejoignent par exemple une loi classique d'évolution.

La FIG 6 représente un premier exemple de loi d'évolution de la corde C en fonction de la hauteur H, pour des hauteurs comprises entre 0% et une valeur HC2, la valeur HC2 étant comprise entre 40% et 70%. Par exemple, sur la FIG 6, la valeur HC2 peut valoir sensiblement 50%. La fonction C est continue et croissante. La fonction C est une fonction convexe de la hauteur H, pour des hauteurs H comprises entre les valeurs HC1 et HC2, la valeur HC1 étant comprise entre 0% et 30%. Par exemple, HC1 vaut 0% sur la FIG 6. Dans l'exemple, la loi de corde C proposée est inférieure à la loi de corde classique pour des hauteurs comprises entre 0% et la valeur HC2. La droite D5 reliant le point d'abscisse 0% (c'est-à-dire HC1) et d'ordonnée C(0) et le point d'abscisse HC21 et d'ordonnée C(HC21), a une pente comprise entre 1,20 et 11,40, la valeur HC21 étant égale à HC1 plus 20%, soit HC21 égale à 20% dans l'exemple.

La convexité de la fonction C implique que dans une première phase, pour des hauteurs comprises entre 0% et la valeur HC21, la corde augmente moins que pour la loi d'évolution classique représentée, alors que dans une deuxième phase, pour des hauteurs comprises entre HC21 et HC2, la corde augmente plus que pour la loi d'évolution classique (en pointillé). Ceci permet à la loi proposée de revenir vers la loi d'évolution classique, jusqu'à la rejoindre à une hauteur proche de la valeur HC2.

La FIG 7 représente un deuxième exemple de loi d'évolution de la corde C en fonction de la hauteur H, pour des hauteurs comprises entre 0% et une valeur HC2, la valeur HC2 étant comprise entre 40% et 70%. Par exemple, sur la FIG 7, la valeur HC2 peut valoir sensiblement 50%. La fonction C est continue et croissante. La fonction C est une fonction convexe de la hauteur H, pour des hauteurs H comprises entre les valeurs HC1 et HC2, la valeur HC1 étant comprise entre 0% et 30%. Par exemple, sur la FIG 7, la valeur HC1 peut valoir environ 16%. La loi de corde C proposée est légèrement supérieure à la loi classique pour des hauteurs comprises entre 0% et environ 7%, et inférieure à la loi classique pour des hauteurs comprises entre environ 7% et la valeur HC2. La droite D5 reliant le point d'abscisse HC1 et d'ordonnée C(HC1) et le point d'abscisse HC21 et d'ordonnée C(HC21), la valeur HC21 valant 36% (soit HC1 plus 20%), a une pente comprise entre 1,20 et 11,40.

La loi proposée suit sensiblement la loi affine classique (en pointillé) pour des hauteurs comprises entre 0% et 7% environ. Elle est concave entre 0% et la valeur HC1. Le point d'abscisse HC1 et d'ordonnée C(HC1) est un point d'inflexion de la courbe représentant la loi proposée.

Par ailleurs, la fonction C étant convexe pour des valeurs de H comprises entre HC1 et HC2, la droite D5 reliant le point d'abscisse HC1 et d'ordonnée C(HC1) et le point d'abscisse HC21 et d'ordonnée C(HC21) a une pente inférieure à celle de la droite reliant le point d'abscisse HC21 et d'ordonnée C(HC21) et le point d'abscisse HC2 et d'ordonnée C(HC2). Dans une première phase, pour des hauteurs comprises entre HC1 et la valeur HC21, la corde C augmente moins que pour la loi classique représentée, alors que dans une deuxième phase, pour des hauteurs comprises entre HC21 et HC2, la corde augmente plus que pour la loi classique. Ceci permet à la loi proposée de revenir vers la loi connue, jusqu'à la rejoindre à une hauteur H proche de la valeur HC2.

Par souci de concision, certains aspects bien connus de la conception et de la réalisation d'une aube de turbomachine n'ont pas été décrits dans le présent exposé, la personne du métier pouvant s'appuyer sur ses connaissances concernant ces aspects pour réaliser une aube selon l'invention.

En particulier, comme expliqué plus haut, la forme d'une pale se définit non seulement par la forme de la ligne d'empilage des coupes élémentaires de la pale, mais également par la forme de ces coupes élémentaires le long de la pale, et la rotation appliquée à ces coupes élémentaires en fonction de leur hauteur. A partir d'une certaine ligne d'empilage, la personne du métier est capable de choisir d'elle-même pour les coupes élémentaires une forme et une rotation appropriées à l'application envisagée.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

## Revendications

1. Aube mobile de turbomachine comprenant une pale définie par un empilage de coupes élémentaires planes suivant une direction radiale, chaque coupe élémentaire étant positionnée radialement à une hauteur H, la hauteur H étant exprimée en pourcentage de la hauteur totale de la pale, et étant repérée par son angle de flèche au bord d'attaque λ et son angle de dièdre au bord d'attaque v, dans laquelle l'évolution de l'angle de flèche λ en fonction de la hauteur H est telle que

   - l'angle de flèche λ atteint un maximum pour une hauteur HλM, la valeur HλM étant comprise entre 5% et 40%;
   - l'angle de flèche λ est croissant entre 0% et HλM ;

   et dans laquelle l'évolution de l'angle de dièdre v en fonction de H est telle que l'angle de dièdre v est une fonction décroissante de la hauteur H, pour des hauteurs H comprises entre 0% et une valeur Hv1, la valeur Hv1 étant comprise entre 10% et 40%.

2. Aube mobile selon la revendication 1, dans laquelle chaque coupe élémentaire a une corde C définie dans le plan de la coupe élémentaire, l'évolution de la corde C en fonction de la hauteur H étant telle que

   - la corde C est une fonction continue et croissante de la hauteur H ;
   - la corde C est une fonction convexe de la hauteur H, pour des hauteurs H comprises entre les valeurs HC1 et HC2, la valeur HC1 étant comprise entre 0 et 30%, et la valeur HC2 étant comprise entre 40% et 70%;
   - la droite reliant le point d'abscisse HC1 et d'ordonnée C(HC1) et le point d'abscisse HC2 et d'ordonnée C(HC2) a une pente comprise entre 0,85 et 3,70.

3. Aube mobile selon la revendication 2, dans laquelle la droite reliant le point d'abscisse HC1 et d'ordonnée C(HC1) et le point d'abscisse HC21 et d'ordonnée C(HC21) a une pente comprise entre 1,20 et 11,40, l'abscisse HC21 étant égale à l'abscisse HC1 plus 20%.

4. Aube mobile selon l'une quelconque des revendications 1 à 3, dans laquelle l'évolution de l'angle de flèche λ en fonction de H est telle que l'angle de flèche λ est positif pour des hauteurs H comprises entre deux valeurs Hλ1 et Hλ2, les valeurs Hλ1 et Hλ2 étant comprises entre 0% et 50%, et l'angle de flèche λ est négatif entre 0% et Hλ1 et/ou entre Hλ2 et 100%.

5. Aube mobile selon l'une quelconque des revendications 1 à 4, dans laquelle l'évolution de l'angle de dièdre v en fonction de H est telle que l'angle de dièdre v est croissant pour des hauteurs comprises entre Hv1 et Hv1+20%.

6. Aube mobile selon l'une quelconque des revendications 1 à 5, dans laquelle l'évolution de l'angle de dièdre v en fonction de H est telle que l'angle de dièdre v atteint un minimum négatif pour une hauteur Hvm, la valeur Hvm étant comprise entre 10% et 40%.

7. Compresseur de turbomachine comprenant une pluralité d'aubes selon l'une quelconque des revendications 1 à 6.

8. Turbomachine comprenant une pluralité d'aubes selon l'une quelconque des revendications 1 à 6.

## Patentansprüche

1. Laufschaufel einer Turbomaschine, umfassend ein durch einen Stapel von ebenen Elementarschnitten in radialer Richtung definiertes Schaufelblatt, wobei jeder Elementarschnitt radial auf einer Höhe H positioniert ist, welche Höhe H als Prozentsatz der Gesamthöhe des Schaufelblattes ausgedrückt ist, und durch den Wölbungswinkel an der Vorderkante λ und den Flächenwinkel an der Vorderkante ν gekennzeichnet ist, wobei der Verlauf des Wölbungswinkels λ in Abhängigkeit von der Höhe H derart ist, dass

- der Wölbungswinkel λ bei einer Höhe HλM einen Höchstwert erreicht, wobei der Wert HλM zwischen 5 % und 40 % liegt;
- der Wölbungswinkel λ zwischen 0% und HλM zunimmt;

und wobei der Verlauf des Flächenwinkels ν in Abhängigkeit von H derart ist, dass der Flächenwinkel ν eine abnehmende Funktion der Höhe H ist, bei Höhen H zwischen 0 % und einem Wert Hν1, wobei der Wert Hν1 zwischen 10 % und 40 % liegt.

2. Laufschaufel nach Anspruch 1, wobei jeder Elementarschnitt ein Sehne C aufweist, die in der Ebene des Elementarschnitts definiert ist, wobei der Verlauf der Sehne C in Abhängigkeit von der Höhe H derart ist, dass

- die Sehne C eine stetige und zunehmende Funktion der Höhe H ist;
- die Sehne C eine konvexe Funktion der Höhe H ist bei Höhen H zwischen den Werten HC1 und HC2, wobei der Wert HC1 zwischen 0 und 30 % und der Wert HC2 zwischen 40 % und 70 % liegt;
- die Gerade, die den Punkt der Abszisse HC1 und der Ordinate C(HC1) mit dem Punkt der Abszisse HC2 und der Ordinate C(HC2) verbindet, eine Steigung zwischen 0,85 und 3,70 aufweist.

3. Laufschaufel nach Anspruch 2, wobei die Gerade, die den Punkt der Abszisse HC1 und der Ordinate C(HC1) mit dem Punkt der Abszisse HC21 und der Ordinate C(HC21) verbindet, eine Steigung zwischen 1,20 und 11,40 aufweist, wobei die Abszisse HC21 der Abszisse HC1 plus 20 % entspricht.

4. Laufschaufel nach einem der Ansprüche 1 bis 3, wobei der Verlauf des Wölbungswinkels λ in Abhängigkeit von H derart ist, dass der Wölbungswinkel λ bei Höhen H zwischen zwei Werten Hλ1 und Hλ2 positiv ist, wobei die Werte Hλ1 und Hλ2 zwischen 0 % und 50 % liegen, und der Wölbungswinkel λ zwischen 0 % und Hλ1 und/oder zwischen Hλ2 und 100 % negativ ist.

5. Laufschaufel nach einem der Ansprüche 1 bis 4, wobei der Verlauf des Flächenwinkels ν in Abhängigkeit von H derart ist, dass der Flächenwinkel ν bei Höhen zwischen Hν1 und Hν1+20 % zunimmt.

6. Laufschaufel nach einem der Ansprüche 1 bis 5, wobei der Verlauf des Flächenwinkels ν in Abhängigkeit von H derart ist, dass der Flächenwinkel ν für eine Höhe Hνm ein negatives Minimum erreicht, wobei der Wert Hνm zwischen 10 % und 40 % liegt.

7. Verdichter einer Turbomaschine umfassend eine Vielzahl von Laufschaufeln nach einem der Ansprüche 1 bis 6.

8. Turbomaschine umfassend eine Vielzahl von Laufschaufeln nach einem der Ansprüche 1 bis 6.

**Claims**

1. A turbine engine rotor blade comprising an airfoil defined by plane airfoil sections stacked in a radial direction, each airfoil section being positioned radially at a height H, where height H is expressed as a percentage of the total height of the airfoil, and being located by its sweep angle λ at the leading edge and its dihedral angle ν at the leading edge, wherein the sweep angle λ varies as a function of height H in such a manner that:

• the sweep angle λ reaches a maximum at a height HλM, the value HλM lying in the range 5% to 40%; and
• the sweep angle λ increases from 0% to HλM;

and wherein the dihedral angle ν varies as a function of H in such a manner that the dihedral angle ν is a decreasing function of height H for heights H lying in the range 0% to a value Hν1, the value Hν1 lying in the range 10% to 40%.

2. A rotor blade according to claim 1, wherein each airfoil section has a chord C defined in the airfoil section plane, variation in the chord C as a function of height H being such that:

• the chord C is a continuous and increasing function of height H;

• the chord C is a convex function of height H for heights H in the range of values HC1 to HC2, the value HC1 lying in the range 0% to 30%, and the value HC2 lying in the range 40% to 70%; and
• the straight line connecting the point of abscissa value HC1 and ordinate value C(HC1) to the point of abscissa value HC2 and ordinate value C(HC2) has a slope lying in the range 0.85 to 3.70.

3. A rotor blade according to claim 2, wherein the straight line connecting the point of abscissa value HC1 and ordinate value C(HC1) to the point of abscissa value HC21 and ordinate value C(HC21) has a slope lying in the range 1.20 to 11.40, the abscissa value HC21 being equal to the abscissa value HC1 plus 20%.

4. A rotor blade according to any one of claims 1 to 3, wherein the variation in sweep angle $\lambda$ as a function of H is such that the sweep angle $\lambda$ is positive for heights H lying in the range of values H$\lambda$1 to H$\lambda$2, the values H1$\lambda$ and H$\lambda$2 lying in the range 0% to 50%, and the sweep angle $\lambda$ is negative in the range 0% to H$\lambda$1 and/or in the range H$\lambda$2 to 100%.

5. A rotor blade according to any one of claims 1 to 4, wherein the value of the dihedral angle $\nu$ varies as a function of H in such a manner that the dihedral angle $\nu$ increases for heights in the range H$\nu$1 to H$\nu$1+20%.

6. A rotor blade according to any one of claims 1 to 5, wherein the dihedral angle $\nu$ varies as a function of H in such a manner that the dihedral angle $\nu$ reaches a minimum that is negative for a height H$\nu$m, the value HVm lying in the range 10% to 40%.

7. A turbine engine compressor having a plurality of blades according to any one of claims 1 to 6.

8. A turbine engine having a plurality of blades according to any one of claims 1 to 6.

FIG.1

FIG.2

FIG.3

FIG.4

FIG.5

FIG.6

FIG.7

**EP 3 030 749 B1**

## RÉFÉRENCES CITÉES DANS LA DESCRIPTION

**Documents brevets cités dans la description**

- US 2010054946 A1